# EUROPEAN PATENT APPLICATION

(11) **EP 3 163 839 A1**
(43) Date of publication of application: **03.05.2017**
(21) Application number: 16195342.7
(22) Date of filing: 24.10.2016
(51) Int. Cl.: H04L 29/06, H04M 1/725, H04W 4/14, H04W 12/12, G06F 21/56, H04W 88/02, H04W 4/12

(54) **DETECTING MALICIOUS APPLICATIONS**

(30) Priority: 26.10.2015 US 201514922752
(71) Applicant: BlackBerry Limited, Waterloo, ON N2K 0A7 (CA)
(72) Inventor: CHEN, Shu-Lin, Kanata, Ontario K2K 3K1 (CA); BUCKLEY, Michael Eoin, Crystal Lake, IL Illinois 60014 (US)
(74) Representative: Moore, Barry

(57) **Abstract**

Systems, methods, and software can be used to detect malicious applications. In some aspects, an outgoing short message sent from a mobile device is monitored. Based on the monitoring, whether a UICC associated with the mobile device is infected is determined. In response to determining that the UICC is infected, a notification is generated.

## Description

### BACKGROUND

The present disclosure relates to detecting malicious applications. In some cases, short messages, e.g., Short Message Service (SMS) messages, can be communicated in a communication network. A communication device may receive and send short messages. In some cases, these short messages can be formatted according to a standardized communications protocol, e.g., the SMS protocol.

### SUMMARY

Accordingly there is provided a method, communication device and computer program as detailed in the claims that follow.

### DESCRIPTION OF DRAWINGS

FIG. 1 is a schematic diagram showing an example communication system that detects malicious applications.
FIG. 2 is a flowchart showing an example process for detecting malicious applications.
FIG. 3 is a block diagram illustrating an example user equipment (UE) device.

Like reference numbers and designations in the various drawings indicate like elements.

### DETAILED DESCRIPTION

In some cases, a user equipment (UE) can include a Universal Integrated Circuit Card (UICC). In some implementations, a UE can include a mobile equipment (ME) and a UICC. The ME performs radio transmission functions and executes applications. The UICC can be used in identifying the UE to a service provider. The UICC can also provide a basis for security between the UE and the service provider's network. In some cases, the UICC can store the international mobile subscriber identity (IMSI) and the related key used to identify and authenticate subscribers on a mobile device. The UICC may be implemented in hardware circuits, software, or a combination thereof.

In some cases, a message, e.g., an SMS message, can be received at the UE. The message can be addressed to the UICC. For example, a (U)SIM Toolkit message may be used by a service provider to install an application on the UICC or provide a software update to the UICC. A (U)SIM Toolkit message is an SMS message that is addressed to the UICC. (U)SIM Toolkit messages include a set of command packets that can define how a UICC would interact directly with entities outside of the UE and initiate commands independently of the UE or the network. In some cases, because the (U)SIM Toolkit message is addressed to the UICC, a UE may forward the (U)SIM Toolkit message directly to the UICC, without displaying it to the user of the UE or otherwise alerting the user. Table 1 shows an example command packet structure.

**Table 1 example command packet structure**

| **Element** | **Length** | **Ciphering** | **Comment** |
|---|---|---|---|
| Command Packet Identifier (CPI) | 1 octet | | Identifies that this data block is the secured Command Packet. |
| Command Packet Length (CPL) | Variable | | This indicates the number of octets from and including the Command Header Identifier to the end of the Secured Data, including any padding octets required for ciphering. |
| Command Header Identifier (CHI) | 1 Octet | | Identifies the Command Header. |
| Command Header Length (CHL) | Variable | | This indicates the number of octets from and including the SPI to the end of the RC/CC/DS. |
| Security Parameter Indicator (SPI) | 2 Octets | | Defines the security level applied to the input and output message. |
| Ciphering Key Identifier (KIc) | 1 Octet | | Key and algorithm Identifier for ciphering. |
| Key Identifier (KID) | 1 Octet | | Key and algorithm Identifier for RC/CC/DS. |
| Toolkit Application Reference (TAR) | 3 Octets | | Coding is application dependent as defined. |
| Counter (CNTR) | 5 Octets | Note 1 | Replay detection and Sequence Integrity counter. |
| Padding Counter (PCNTR) | 1 Octet | Note 1 | This indicates the number of padding octets used for ciphering at the end of the secured data. |
| Redundancy Check (RC), Cryptographic Checksum (CC) or Digital Signature (DS) | Variable | Note 1 | Length depends on the algorithm. A typical value is 8 octets if used, and for a DS could be 48 or more octets; the minimum should be 4 octets. |
| Secured data | Variable | Note 1 | Contains the Secured Application Message and possibly padding octets used for ciphering. |
| Note 1: These fields are ciphered if ciphering is indicated in the Security Header | | | |

As shown in Table 1, the command packet includes the Security Parameter Indicator (SPI) field. The SPI field provides information on the security used in the incoming Command Header and any reply sent by the UICC. The SPI includes two octets. The first SPI octet includes information on the integrity approach used, e.g., a redundancy check (RC), checksum (CC), or digital signature (DS). If the SPI indicates that no RC, CC, or DS is present in the Command Header, then the RC/CC/DS field is of zero length. The first SPI octet also indicates the presence of ciphering mode and counter behavior.

The second SPI octet provides information on proof of receipt (PoR). PoR is an automatically generated reply. In some cases, the PoR may be generated as a result of attacks. In some cases, the PoR field can be configured to request the entity that receives the command packet to send a PoR. For example, the b2b1 bits in second octet in the SPI field includes may be set to "00"-indicating that no PoR is required, "01"-indicating that a PoR is required to be sent to the sending entity (SE), "10"-indicating that a PoR is required when an error has occurred, or "11" -reserved. The second SPI octet also provides security related information. For example, the b4b3 bits in the second SPI octet indicate the types of security applied to the PoR response. The b5 bit in the second SPI octet indicates whether the PoR response is ciphered. The b6 bit in the second SPI octet indicates whether SMS-DELIVER-REPORT or SMS-SUMBIT should be used to send the PoR response.

The (U)SIM Toolkit message also includes the Key Identifier (KID) field. The KID field indicates the ciphering algorithms used in computing the cryptographic checksum when b2b1 bits in the first octet of the SPI are set to "10". In some cases, the KID field can be configured to request the entity that receives the command packet to use a particular encryption algorithm in sending the reply. For example, b2b1 bits in the KID field may be set to "01" to indicate a (Data Encryption Standard) DES-based algorithm. Examples of DES-based algorithm include single DES (also referred to as "DES") or triple DES (also referred to as "3DES"). Single DES was originally published in 1977 and is considered a very weak algorithm due to its short 56-bit key. As a result, it was withdrawn as a cryptographic standard by NIST in 2005 and deprecated from UICC in 2008. However, some legacy UICC may still support single DES. The KID field also includes b4b3 bits, which may be set to "00"-indicating single DES in Cipher Block Chaining (CBC) mode, "01" or "10"-indicating 3DES, or "11"-indicating single DES in Electronic Codebook (ECB) mode.

In some cases, the UICC may be subject to messaging attacks. In a messaging attack to the UICC, the UICC may receive a malicious message and automatically send a response even when authentication of the message fails. In some cases, the malicious message may be a command packet targeting the (U)SIM Toolkit. UICCs that follow the 2012 or later standards may not provide any response unless the incoming command packet is successfully authenticated. On the other hand, UICCs that follow the prior standards may provide a response, and therefore, may be subject to attacks.

Examples of messaging attacks include the premium rate attack. In a premium rate attack, the attacker triggers the UICC to send a message to a premium rate number, and therefore receive financial benefits associated with the premium rate number. In one example, the attacker sends a malicious (U)SIM Toolkit message addressed to a UICC. The malicious message may trigger a response addressed to a premium rate number. For example, the attacker may set bits b2b1 in the second SPI octet to "01" to request a PoR. The attacker may also set the bit b6 in the second SPI octet to "1" to request the PoR be sent by an SMS SUBMIT message to the sending entity (SE) instead of the operators Short Message Service Center (SMSC). The attacker may further set the sending entity (SE) address in the (U)SIM Toolkit message to the premium service. The user of the UE that is associated with the UICC is then charged for use of the premium service without the user's knowledge, consent, or input. Because the attacker may not know the UICC keys, authentication of this message may fail. However, as discussed previously, UICCs that follow the pre-2012 standards may provide a response nevertheless, and therefore, are subject to the attack.

Examples of messaging attacks also include the key compromise attack. In a key compromise attack, an attacker obtains an over the air (OTA) key by making the UICC send a response message with a weak cryptographic protection. The attacker determines the key through crypto-analysis over the response message. With the encryption key, the attacker may decrypt voice/data traffic at the radio layer and install malicious application in the UICC.

In an example, an attacker sends a malicious (U)SIM Toolkit over the air (OTA) message to a UICC. The message requests an automatic response with single DES checksum. Though the incoming malicious message is incorrectly signed (since the attacker does not yet know the real OTA key), the UICC may automatically reply with a correctly signed response as requested. The attacker can then perform crypto-analysis, e.g., using a rainbow table, on the signed response to obtain the real OTA key. Once the key is obtained, the attacker may download a malicious application on the UICC. The malicious application may use pre-defined functions available in the phone, e.g., change voicemail numbers, query the phone location, silently send SMS messages, copy contact list, and obtain the UICC master secret. The UICC master secret provides the basis of security between a service provider and a user. If UICC master secret is compromised, any security provided by the service provider may be at risk for both voice and data transmissions.

In some cases, if an attacker obtains the OTA key, the attacker may use the OTA key to install malicious applications on the UICC. The malicious application may access user information stored on the UICC. The malicious application may also access user information of the UE, e.g., location information, call logs, stored files. The malicious application may report this information to the attacker. In some cases, a malicious application can also generate short messages addressed to a premium rate number in a premium rate attack.

In some cases, a virus scanning software running on the ME may be used to determine whether the ME is infected with malicious applications. However, the malicious applications installed on a UICC may be difficult to detect by the virus scanning software. The UICC operates in a separate operating environment, e.g., operating system and/or hardware circuit, than the ME part of the UE, therefore, the virus scanning software may not be able to access or interpret software installed on the UICC.

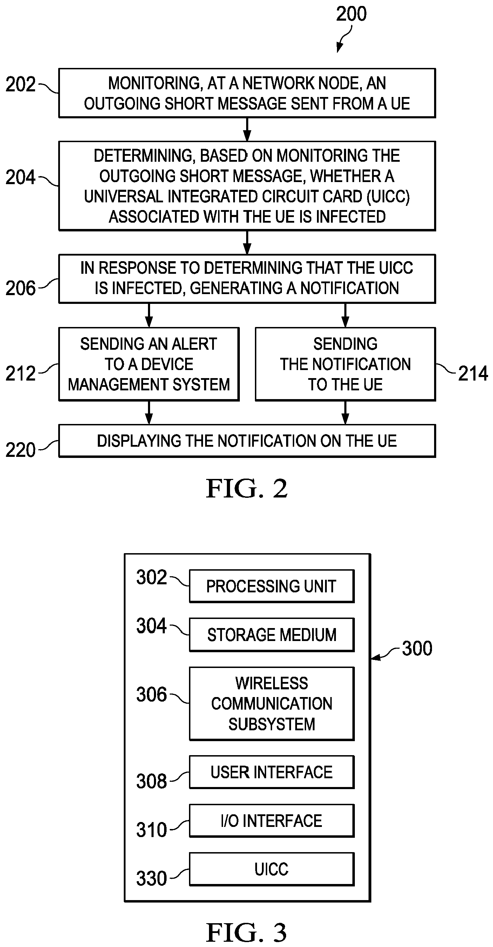

In some cases, malicious applications installed on a UICC can be detected by monitoring the outgoing short messages from a UE. For example, if a large number of short messages are transmitted in a short time frame, a UICC may be affected. In some cases, the addresses of the outgoing short messages can be examined to refine the determination process. FIGS. 2-3 and associated descriptions provide additional details of these implementations.

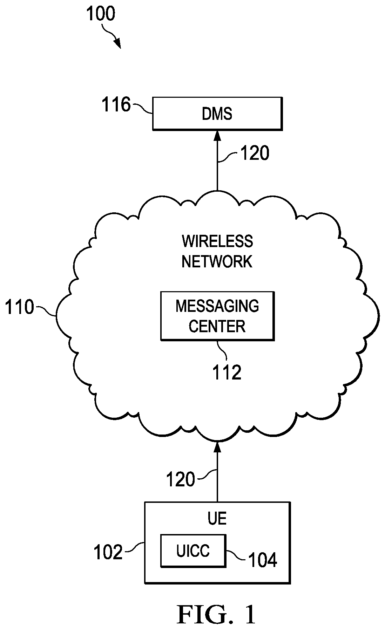

FIG. 1 is a schematic diagram showing an example communication system 100 that detects malicious applications. The example communication system 100 includes a wireless communication network 110 that is communicatively coupled with a UE 102 and a device management system (DMS) 116. The wireless communication network 110 also includes a messaging center 112.

As shown in FIG. 1, the wireless communication network 110 includes the messaging center 112. The messaging center 112 is a network node that can be configured to store, forward, convert, and deliver messages to and from the UE 102. In some cases, the messaging center 112 may be a short message service center (SMSC). In some cases, the messaging center 112 can route the outgoing messages sent by the UE 102 to the DMS 116.

The DMS 116 represents an application, set of applications, software, software modules, hardware, or combination thereof that can be used to manage devices. In some cases, a service provider can configure the DMS 116 to determine whether a UICC associated with a UE is infected with a malicious application. For example, the DMS 116 can monitor the outgoing short messages 120 that are sent from the UE 102. The DMS 116 can determine whether a UICC associated with the UE 102 is infected based on the number of the outgoing short messages sent from the UE 102. If the DMS 116 determines that the UICC associated with the UE 102 is infected, the DMS 116 can generate a notification and send the notification to the UE 102. FIG. 2 and associated descriptions provide additional details to these implementations.

In some cases, a service provider can implement the DMS 116 and the messaging center 112 in the same hardware platform. In some cases, a service provide can implement the DMS 116 as part of the messaging center 112. Alternatively or in combination, the DMS 116 can be implemented at a platform that is different than the messaging center 112. In these or other cases, the messaging center 112 can forward the outgoing short messages 120 to the DMS 116 for monitoring.

The wireless communication network 110 can include one or a plurality of radio access networks (RANs), core networks (CNs), and external networks. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (UMTS), Long Term Evaluation (LTE), or LTE-Advanced. In some instances, the core networks may be evolved packet cores (EPCs).

A RAN is part of a wireless telecommunication system which implements a radio access technology, such as UMTS, CDMA2000, 3GPP LTE, and 3GPP LTE-A. In many applications, a RAN includes at least one base station. A base station may be a radio base station that may control all or at least some radio-related functions in a fixed part of the system. The base station may provide radio interface within their coverage area or a cell for the UE 102 to communicate. The base station may be distributed throughout the cellular network to provide a wide area of coverage. The base station directly communicates to one or a plurality of UEs, other base stations, and one or more core network nodes. The base station may operate on any of the different wireless communication technologies. Example wireless technologies include Global System for Mobile Communication (GSM), Universal Mobile Telecommunications System (UMTS), 3GPP Long Term Evolution (LTE), LTE-Advanced (LTE-A), wireless broadband communication technologies, and others. Example wireless broadband communication systems include IEEE 802.11 wireless local area network, IEEE 802.16 WiMAX network, and others.

The example communication system 100 includes the UE 102. The UE 102 includes a UICC 104. In some cases, the UE 102 can monitor the outgoing short messages 120 that are sent from the UE 102. The UE 102 can determine whether the UICC 104 is infected based on the number of the outgoing short messages sent from the UE 102. If the UE 102 determines that the UICC 104 is infected, the UE 102 can generate a notification and display the notification on the UE 102. In some cases, the UE 102 can send an alert to the DMS 116 to indicate that the UICC 104 is infected. FIG. 2 and associated descriptions provide additional details to these implementations.

Turning to a general description, a UE, e.g., the UE 102, may be referred to as mobile device, mobile electronic device, user device, mobile station, subscriber station, portable electronic device, mobile communications device, wireless modem, or wireless terminal. Examples of a UE (e.g., the UE 102) may include a cellular phone, personal data assistant (PDA), smart phone, laptop, tablet personal computer (PC), pager, portable computer, portable gaming device, wearable electronic device, or other mobile communications device having components for communicating voice or data via a wireless communication network. The wireless communication network may include a wireless link over at least one of a licensed spectrum and an unlicensed spectrum. The term "UE" can also refer to any hardware or software component that can terminate a communication session for a user. In addition, the terms "user equipment," "UE," "user equipment device," "user agent," "UA," "user device," and "mobile device" can be used synonymously herein.

FIG. 3 is a block diagram illustrating an example user equipment (UE) device 300. The illustrated device 300 includes a processing unit 302, a computer-readable storage medium 304 (for example, ROM or flash memory), a wireless communication subsystem 306, a user interface 308, an I/O interface 310, and a UICC 330.

The processing unit 302 can include one or more processing components (alternatively referred to as "processors" or "central processing units" (CPUs)) configured to execute instructions related to one or more of the processes, steps, or actions described herein in connection with one or more of the implementations disclosed herein. In some implementations, the processing unit 302 may be configured to generate control information, such as a measurement report, or respond to received information, such as control information from a network node. The processing unit 302 may also be configured to make a Radio Resource Management (RRM) decision such as cell selection/reselection information or trigger a measurement report. The processing unit 302 can also include other auxiliary components, such as random access memory (RAM) and read-only memory (ROM). The computer-readable storage medium 304 can store an operating system (OS) of the device 300 and various other computer-executable instructions, logic or software programs for performing one or more of the processes, steps, or actions described above.

The wireless communication subsystem 306 may be configured to provide wireless communication for voice, data, and/or control information provided by the processing unit 302. The wireless communication subsystem 306 can include, for example, one or more antennas, a receiver, a transmitter, a local oscillator, a mixer, and a digital signal processing (DSP) unit. In some implementations, the subsystem 306 can support multiple-input multiple-output (MIMO) transmissions. In some implementations, the receiver in the wireless communication subsystems 306 can be an advance receiver or a baseline receiver. Two receivers can be implemented with identical, similar, or different receiver processing algorithms.

The user interface 308 can include, for example, one or more of a screen or touch screen (for example, a liquid crystal display (LCD), a light emitting display (LED), an organic light emitting display (OLED), a micro-electromechanical system (MEMS) display), a keyboard or keypad, a trackball, a speaker, and a microphone. The I/O interface 310 can include, for example, a universal serial bus (USB) interface.

The UICC 330 represents an application, set of applications, software, software modules, hardware, or combination thereof that can be configured to identify the device 300. The UICC 330 may include a Subscriber Identity Module (SIM) application, a Universal Subscriber Identity Module (USIM) application, or a Removable User Identity Module (R-UIM) application. Various other components can also be included in the device 300.

FIG. 2 is a flowchart showing an example process 200 for detecting malicious applications. The process 200 can be implemented by a user device in a communication system. For example, the process 200 can be implemented by the UE 102 shown in FIG. 1. The process 200 can also be implemented by another type of system or module, e.g., the DMS 116 or the messaging center 112 shown in FIG. 1. The example process 200 shown in FIG. 2 can also be implemented using additional, fewer, or different operations, which can be performed in the order shown or in a different order.

The example process 200 begins at 202, where an outgoing short message sent from a UE is monitored. The outgoing short messages can be monitored at a network node, e.g., the UE 102, the DMS 116, the messaging center 112, or a combination thereof. In some cases, the short message can be a SMS message.

At 204, based on monitoring the outgoing short message, whether a UICC associated with the UE is infected can be determined. In some cases, the determination can be made by the network node that monitors the outgoing short messages. In some cases, the network node that monitors the outgoing short message can send the monitoring results to another network node to determine whether the UE is infected. For example, the messaging center 112 can send statistics of outgoing short messages of a UE to the DMS 116 to determine whether the UE is infected.

In some cases, the number of outgoing short messages from a UE can be used to determine whether a UICC associated with the UE is infected. For example, if the number of outgoing short messages exceeds a threshold within a time period, then the UICC can be determined to be infected. In some cases, a threshold can be set for each outgoing address. For example, the UICC can be determined to be infected if the number of outgoing short messages to one address exceeds a threshold. In some cases, different thresholds can be set for different outgoing addresses.

In some cases, a user can configure the parameters associated with the threshold and the time period. For example, the UE can display a user interface, and the user can set a threshold for outgoing short messages in an hour, a day, a week, a month, or any other duration. In some cases, a service provider can configure these parameters. The parameters can be loaded on the UE before the UE is sold, or sent to the UE via the wireless communication network 110.

In some cases, a whitelist can be used to refine the determination of whether the UICC is infected. A whitelist can include addresses that are known to the service provider or the user and therefore are likely not used by an attacker. For example, a service provider may communicate with the UICC or other applications on the UE using short messages. The service provider can include the address of the DMS 116 or the address of any other network entities that the service provider uses to correspond with the UE in the whitelist. In some cases, the user can also include address information of friends and families, e.g., the addresses stored in the contact list of the UE, in the whitelist. The service provider can preload the whitelist on the UE. The service provider can also send the whitelist or the updates to the UE via the wireless communication network 110. In some cases, the UE can provide a user interface for the user to edit the whitelist. In some cases, the user interface can indicate to the user that some addresses may be legitimate, but the user can still decide whether to add the address to the whitelist, not add the address to the whitelist, or block the outgoing message with the address.

Using a whitelist can reduce the number of false alarms. In some cases, a threshold number of outgoing short messages that are not addressed to any addresses in the whitelist can be configured. In these or other cases, the addresses of the outgoing short messages can be checked against the whitelist. If the address matches one of the addresses in the whitelist, the message does not count against the threshold because the message is probably not sent to an attacker. Therefore, a UICC can be determined to be infected if the number of outgoing short messages that are not addressed to any addresses in the whitelist exceeds a threshold within a time period. In some cases, different thresholds, e.g., total number of outgoing short messages and the number of outgoing short messages not addressed to any addresses in the whitelist. An alarm can be raised for further analysis if either one of the thresholds is met.

At 206, a notification is generated in response to determining that the UICC is infected. If the number of outgoing short messages exceeds the threshold, a notification can be generated to indicate that the UICC is infected. In some cases, the determination can be made at the UE that is associated with the UICC. In these cases, the process 200 proceeds from 206 to 212, where an alert is sent to a DMS. The alert can indicate that the UICC is infected. The alert can also include statistics of the outgoing short messages from the UE, e.g., the number of the outgoing short messages, the addresses of the messages, and a combination thereof.

In some cases, the determination is made at a network node other than the UE, e.g., in a DMS or in a messaging center. In these cases, the process 200 proceeds from 206 to 214, where the notification is sent to the UE.

From either 212 or 214, the process 200 proceeds to 220, where the notification is displayed on the UE. In some cases, the notification can indicate to the user that too many short messages have been sent from the UE. In some cases, the notification can indicate that the short messages are sent to addresses not included in the whitelist. The notification can also indicate the addresses of the outgoing short messages. In some cases, a user interface associated with the notification can be displayed on the UE. The user interface can be enabled to select actions in response to the notification. The actions can include, e.g., ignore the notification, initiate replacement of the UICC, contact the service provider, block future short messages to a specific address or to any addresses, or a combination thereof.

In some cases, incoming short messages can be monitored to determine whether an attacker is using the message to install malicious applications on the UICC. The incoming short message can be monitored at the UE or at the messaging center. In some case, monitoring the incoming short messages can include identifying the type of an incoming short message. For example, if the type of the message is set to "USIM_DATA_DOWNLOAD," the message can be configured to install an application on the UICC. In these examples, the source address of the message can be further identified. If the source address is included in a whitelist provided by the service provider, the short message is likely to be legitimate, and therefore, may not trigger an alarm. If the source address is not included in the whitelist, the short message may be sent by an attacker, and therefore an alarm can be raised. If the incoming short message is monitored at the UE, the alarm can be sent to a DMS. If the incoming short message is monitored at the messaging center, the alarm can be sent to the UE, the DMS, or a combination thereof.

In some cases, incoming short messages can also be monitored to determine whether an attacker is using the message to trigger an automatic response. For example, if the type of the message is set to "Type 0 SMS," the message can instruct the recipient to transmit a receipt while discarding the contents of the message. In these examples, the source address of the message can be further identified. As discussed previously, if the source address is included in a whitelist provided by the service provider, the short message is likely to be legitimate, and therefore, may not trigger an alarm. If the source address is not included in the whitelist, the short message may be sent by an attacker, and therefore an alarm can be raised. If the incoming short message is monitored at the UE, the alarm can be sent to a DMS. If the incoming short message is monitored at the messaging center, the alarm can be sent to the UE, the DMS, or a combination thereof.

In some cases, the UE can display a user interface after the alarm is raised or received. The user interface can enable the user to select actions to allow the short message to proceed, block the short message, block all future short messages from the source address, add the address to a whitelist, contact a service provider, or a combination thereof.

In some cases, instead of using short messages, an infected UICC may attempt to set up a data connection and send user information using the data connection. In these or other cases, the target addresses of the data connections can be monitored. The target addresses can be monitored at the UE, at a base station, a core network entity, or any other network node. As discussed previously, in some cases, a threshold number of messages with a time period can be used to determine whether the UICC is infected. In some cases, a whitelist can be used to filter the target addresses and refine the determination.

Some of the subject matter and operations described in this specification can be implemented in digital electronic circuitry, or in computer software, firmware, or hardware, including the structures disclosed in this specification and their structural equivalents, or in combinations of one or more of them. Some of the subject matter described in this specification can be implemented as one or more computer programs, i.e., one or more modules of computer program instructions, encoded on a computer storage medium for execution by, or to control the operation of, data-processing apparatus. A computer storage medium can be, or can be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data-processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them.

A computer program (also known as a program, software, software application, script, or code) can be written in any form of programming language, including compiled or interpreted languages, declarative or procedural languages. A computer program may, but need not, correspond to a file in a file system. A program can be stored in a portion of a file that holds other programs or data (e.g., one or more scripts stored in a markup language document), in a single file dedicated to the program, or in multiple coordinated files (e.g., files that store one or more modules, sub programs, or portions of code). A computer program can be deployed to be executed on one computer or on multiple computers that are located at one site or distributed across multiple sites and interconnected by a communication network.

Some of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and processors of any kind of digital computer. Generally, a processor will receive instructions and data from a read-only memory or a random-access memory or both. A computer can include a processor that performs actions in accordance with instructions, and one or more memory devices that store the instructions and data. A computer may also include, or be operatively coupled to receive data from or transfer data to, or both, one or more mass storage devices for storing data, e.g., magnetic disks, magneto optical disks, or optical disks. However, a computer need not have such devices. Devices suitable for storing computer program instructions and data include all forms of non-volatile memory, media and memory devices, including by way of example semiconductor memory devices (e.g., EPROM, EEPROM, flash memory devices, and others), magnetic disks (e.g., internal hard disks, removable disks, and others), magneto optical disks , and CD ROM and DVD-ROM disks. In some cases, the processor and the memory can be supplemented by, or incorporated in, special purpose logic circuitry.

To provide for interaction with a user, operations can be implemented on a computer having a display device (e.g., a monitor, or another type of display device) for displaying information to the user and a keyboard and a pointing device (e.g., a mouse, a trackball, a tablet, a touch sensitive screen, or another type of pointing device) by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A computer system may include a single computing device, or multiple computers that operate in proximity or generally remote from each other and typically interact through a communication network. Examples of communication networks include a local area network ("LAN") and a wide area network ("WAN"), an inter-network (e.g., the Internet), a network comprising a satellite link, and peer-to-peer networks (e.g., ad hoc peer-to-peer networks). A relationship of client and server may arise by virtue of computer programs running on the respective computers and having a client-server relationship to each other.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementation described above should not be understood as requiring such separation in all implementations, and it should be understood that the described program components and systems can generally be integrated together in a single software product or packaged into multiple software products.

Also, techniques, systems, subsystems, and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

While the above detailed description has shown, described, and pointed out the fundamental novel features of the disclosure as applied to various implementations, it will be understood that various omissions, substitutions, and changes in the form and details of the system illustrated may be made by those skilled in the art, without departing from the intent of the disclosure. In addition, the order of method steps are not implied by the order they appear in the claims.

## Claims

1. A method, comprising:
monitoring, at a network node, an outgoing short message sent from a mobile device;
determining, based on monitoring the outgoing short message, whether a Universal Integrated Circuit Card, UICC, associated with the mobile device is infected; and
in response to determining that the UICC is infected, generating a notification.

2. The method of claim 1, wherein determining whether the UICC is infected comprises:
determining a number of outgoing short messages within a time period; and
determining whether the UICC is infected based on a comparison of the number of outgoing short messages to a threshold number of messages.

3. The method of claim 1 or 2, wherein determining whether the UICC is infected comprises:
determining a number of outgoing short messages not addressed to at least one address in a whitelist; and
determining whether the UICC is infected based on a comparing of the number of outgoing short messages not addressed to at least one address in the whitelist to a threshold number of messages.

4. The method of claim 3, wherein the whitelist includes an address that is provided by at least one of a user of the mobile device or a service provider.

5. The method of any preceding claim, further comprising at least one of outputting the notification on the mobile device or sending an alert to a device management system.

6. The method of any preceding claim, wherein the network node is at least one of the mobile device or a short message service center, SMSC.

7. The method of claim 6, further comprising:
sending the notification to the mobile device.

8. A communication device, comprising:
a memory; and
at least one hardware processor communicatively coupled with the memory and configured to carry out the method of any preceding claim.

9. A computer program which when executed on a computing device is configured to cause a computing device to perform the method of any one of claims 1 to 7.
